# EUROPEAN PATENT SPECIFICATION

(11) **EP 1 365 881 B1**
(45) Date of publication and mention of the grant of the patent: **29.04.2009**
(21) Application number: 02711600.3
(22) Date of filing: 11.02.2002
(51) Int. Cl.: B23K 26/42

(54) **A DEVICE FOR COOLING A WORKPIECE**
VORICHTUNG ZUM KÜHLEN EINES WERKSTÜCKS
APPAREIL DE REFROIDISSEMENT D'UNE PIECE

(30) Priority: 09.02.2001 SE 0100445; 04.05.2001 SE 0101562
(43) Date of publication of application: 03.12.2003
(73) Proprietor: Aga Gas AB, 172 82 Sundbyberg (SE)
(72) Inventor: WILLIAMSSON, Bo, S-184 94 Åkersberga (SE); HAAPANEN, Göran, S-214 66 Malmö (SE); LILJEHULT, Tony, S-732 33 Arboga (SE)
(74) Representative: Kasseckert, Rainer
(86) International application number: PCT/SE2002/000234
(87) International publication number: WO 2002/064303

(56) References cited:
- US-A- 4 125 757
- US-A- 5 073 694
- PATENT ABSTRACTS OF JAPAN & JP 61 119 393 A (HITACHI LTD) 06 June 1986

## Description

### BACKGROUND OF THE INVENTION AND PRIOR ART

The present invention relates to a device for cooling a workpiece in connection with machining the workpiece with a laser beam. The invention also relates to a plant for machining a workpiece comprising a laser apparatus arranged to direct a laser beam towards the workpiece and a device for cooling the workpiece. The invention further relates to a method for cooling a workpiece in connection with machining the workpiece with a laser beam.

More and more, laser is used to machine metal, partly for cutting metal workpieces and partly for welding metal workpieces to each other. A very high accuracy can be obtained when laser cutting metal workpieces. The cut surfaces have a very high surface finish. Cutting with laser is thus suitable for precision working of workpieces usable in a range of applications, such as, for example, machine components. A specific component that advantageously can be machined by laser cutting is the holding ring which is arranged between the roller races of a roller or ball bearing and which is intended to keep the rollers or the balls in place. As a starting material, a ring is manufactured which is then machined by a laser beam to cut out openings in the ring in which the rollers or balls are to be located in the completed bearing. One problem in connection with the manufacturing of such rings is that heat will be added because of the laser cutting. If one wishes to increase the machining speed, the efficiency of the laser beam must be increased, meaning that the amount of heat added to the workpiece will be increased further. If the temperature increase in the ring or in another workpiece becomes too high, the ring might be deformed, i.e. it obtains another shape than the shape the ring had before the laser cutting. Even if the deformation is very small, the problem can be of major importance for precision components, such as holding rings for roller or ball bearings. The problem also increases with the size of the workpieces to be machined.

It should be noted that this problem is general during laser machining of precision components and not solely associated with laser cutting of holding rings. It is, of course, also a general desire to be able to increase the machining speed as much as possible in order to improve the efficiency of the machining process.

In order to solve this problem, it is possible to cool the workpiece. There are a number of different methods and devices for cooling workpieces that have been machined in different ways.

JP 61119393 shows a method for cutting with laser, the workpiece being cooled from above and from underneath by supplying carbon dioxide in the vicinity of the laser beam. Nozzles are thus arranged in the vicinity of the workplace and carbon dioxide is added directly towards the workpiece. Such a method however has the drawback that it is difficult to obtain a sufficient cooling efficiency. Another problem in connection with the laser cutting is that the carbon dioxide is not allowed to reach the laser beam, since laser light is absorbed by carbon dioxide and since the carbon can contaminate the machined metal.

US 4,125,757 shows cutting of a workpiece with laser, wherein the workpiece is submerged in a cooling liquid, for example water, during the cutting operation.

WO 95/23669 shows a welding of metal workpieces using conventional welding. The workpieces are cooled during the welding operation by carbon dioxide being sprayed towards the workpieces on the opposite side of the welding seam.

More precisely, WO 95/23669 shows a device for cooling a workpiece in connection with welding of the workpiece. The device comprises a source for providing a cooling medium, a member for supplying the cooling medium and an application member arranged to be positionable in the vicinity of or against the workpiece. The supplying member is arranged to supply the cooling medium to the application member. The application member is arranged to form an essentially closed space together with the workpiece for receiving the cooling medium. The space is arranged to allow application of the cooling medium against the workpiece. The application member is arranged to apply the cooling medium against a part of the workpiece at the same time as the welding is performed at another part of the workpiece.

US 4,152,568 also shows a conventional method for arc welding in combination with cooling the workpiece with carbon dioxide. In this case, carbon dioxide is also sprayed on the workpiece at the opposite side of the welding seam.

### SUMMARY OF THE INVENTION

The purpose of the present invention is to improve the efficiency and/or the accuracy during machining of a workpiece with laser machining. More specifically, it is aimed at an efficient cooling of a workpiece in connection with laser machining.

This object is achieved with the device as defined in claim 1. Thanks to the essentially closed space, the cooling medium can be used in an efficient way and can achieve a very efficient cooling of the part of the workplace upon which the cooling medium is applied. In such a way, it is possible to lower the temperature of the workpiece and thus the maximum temperature that the workpiece reaches in connection with the laser working can be reduced in comparison to if the workpiece was not cooled initially. Thanks to such a reduced maximum temperature of the workpiece, the risk for deformation of the workpiece during the laser machining is reduced. At the same time, the invention makes it possible to apply a higher power by the laser beam without reaching a maximally allowed highest temperature in the workpiece. Subsequently, the working speed, for example the cutting speed, can be increased. Thanks to the application member being arranged to apply the cooling medium against one part of the workplace at the same time as the laser beam hits another part of the workpiece. In such a way, the workpiece can be given an initial temperature decrease with respect to a part of the workpiece and this part can at a later occasion be machined with the laser beam. With a box-like element it is ensured that a sufficient amount of cooling medium can be contained in the application member.

According to a preferred embodiment of the invention, the application member can comprise a sealing member arranged to sealingly bear against the workpiece and to extend at least around a part of the opening. With such a sealing member which can comprise an strip of an elastic material, the cooling medium can, in an efficient way, be kept within the space. It is especially important that the sealing member seals the space at least in the direction which is directed towards the laser beam in order to avoid the cooling medium to reach the laser beam.

According to a further embodiment of the invention, the application member can thus be arranged to be positioned in such a way that the cooling medium cools at least a part of the workpiece before the laser beam hits that part of the workpiece. At the same time, it is secured according to these embodiments that cooling and laser machining can be carried out at the same time.

According to a further embodiment of the invention, the cooling medium comprises carbon dioxide. Carbon dioxide is a very efficient and relatively inexpensive cooling medium. Advantageously, the application member is arranged to supply carbon dioxide in such a way that it is present in essentially solid state within the space.

According to a further embodiment of the invention, the cooling medium comprises nitrogen. Liquid nitrogen is also a very efficient cooling medium.

According to a further embodiment of the invention, the application member comprises at least one nozzle arranged to allow passage of the cooling medium being supplied to the space. Thanks to such a nozzle, the cooling medium can be allowed to expand after passage through the nozzle. In such a way, carbon dioxide supplied in liquid state from the source can turn into a solid state after passage through the nozzle. Thus, the application member can comprise at least one tube having a first end opening into the space and a second end in which the nozzle is arranged for passage of liquid carbon dioxide, the tube forming an expansion chamber for the carbon dioxide supplied through the nozzle.

According to a further embodiment of the invention, the application member is arranged to allow the cooling medium in the space to be forced against the workpiece. As an alternative or complement, the device can comprise means arranged to increase the transfer of heat between the cooling medium and the workpiece. Said means can also comprise a piston member arranged in the space and arranged to force the cooling medium against the workpiece. Said means can further be arranged to provide a movement in the cooling medium in the space. Such a movement can, for example, be achieved if the cooling medium is supplied intermittently. There may also be some kind of mechanical stirrer in the space.

The object is also achieved with the plant as defined in claim 13. Advantageously, the plant comprises a feeding member arranged to provide a relative movement between the laser beam and the workpiece, the application member being arranged to be positioned in such a way that the cooling medium cools at least a part of the workpiece before the laser beam hits that part of the workpiece.

The object is also achieved with the method as defined in claim 15.

Preferred embodiments of the method are defined in the claims 16-21.

### SHORT DESCRIPTION OF THE DRAWINGS

The present invention is now to be explained more closely through different embodiments, shown such as examples, and with reference to the attached drawings.
Fig. 1 schematically shows a plant with a device for cooling a workpiece.
Fig. 2 shows a view from above of the workpiece.
Fig. 3 shows a view from underneath of a component of the device in Fig. 1.
Fig. 4 shows a sectional side view of another embodiment of the component in Fig. 3.

### DETAINED DESCRIPTION OF DIFFERENT EMBODIMENTS OF THE INVENTION

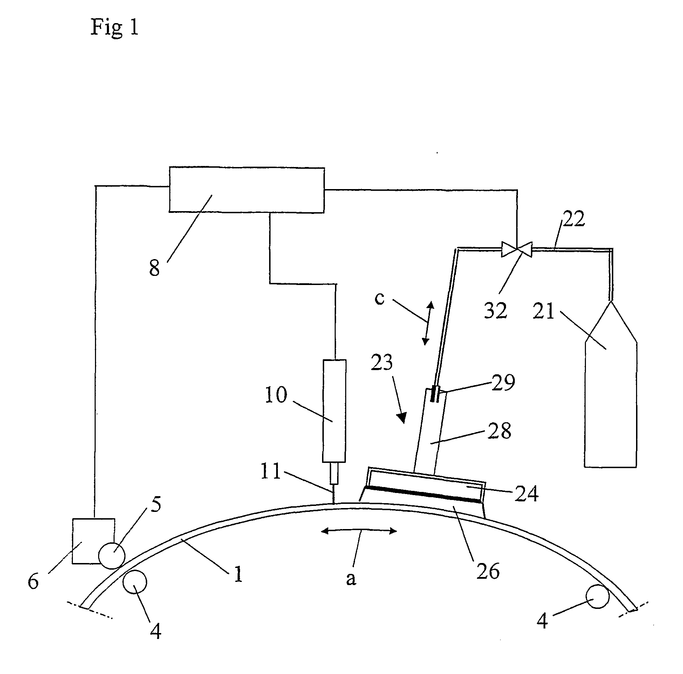

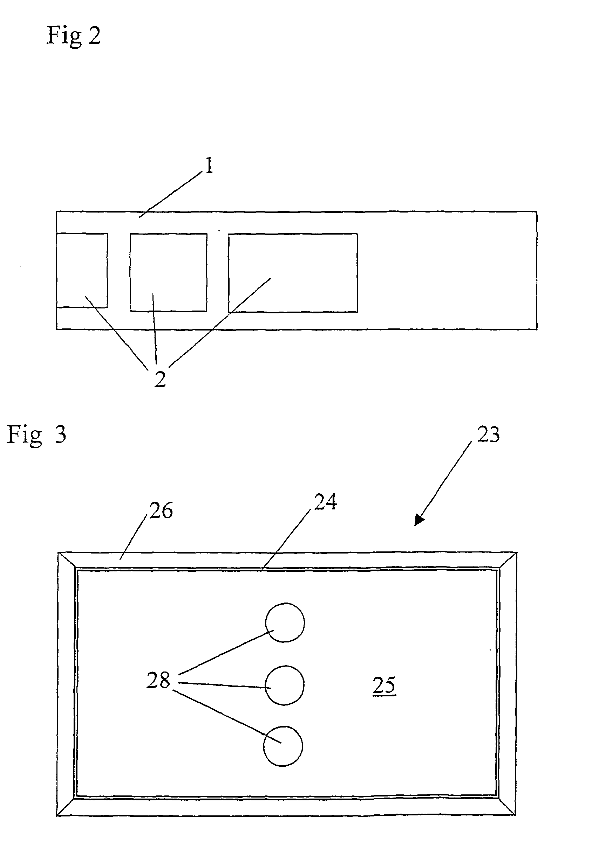

Fig. 1 shows a plant for machining a workpiece 1. In the example shown the workpiece 1 is an essentially circular holding ring for rollers in a roller bearing. The holding ring 1 is shown more closely in Fig. 2 in a schematic view from above. The machining intended in the present application is to cut out holes 2 from the holding ring 1 with a laser beam. These holes 2 are intended to receive the rollers of the bearing which is to be manufactured. Fig. 2 shows a holding ring 1 in which the holes have been made. It shall be noted that the invention also is applicable on holding rings 1 with some other appearance, for example with round holes 2 for reception of balls of a ball bearing. The invention is further applicable to other workpieces than holding rings 1 for bearings, for example different types of precision components for machines.

The plant comprises a support arrangement to support and hold the workpiece 1 during the machining. In the shown embodiment the support arrangement has been exemplified with two supporting wheels 4 on which the workpiece 1 rests. On the outside of the workpiece 1 opposite to one of the supporting wheels 4 there is a feeding member with a driving wheel 5 which can be rotated continuously or intermittently with the help of a driving member 6 for example in the form of an electric drive motor. The driving member 6 is connected to a control unit 8 of the plant. With the help of the driving wheel 5 the workpiece 1 can thus be moved in the direction of the arrow a in relation to the two rotatable supporting wheels 4 that are preferably mounted on a stationary foundation (not shown) of the plant.

The plant further comprises a laser machining apparatus 10 which in itself is known and arranged to provide a laser beam 11 that is directed towards the workpiece 1. In the embodiment shown, the laser machining apparatus 10 is also connected to the common control unit. The workpiece 1 can thus be machined with help of the laser beam 11 and working gas being supplied against the workpiece 1 in a conventional way around the laser beam 11. In the embodiment shown the laser machining apparatus 10 is essentially stationary in the direction of the arrow a in relation to the workpiece 1 which is thus moved intermittently or continuously in the direction of the arrow a in relation to the laser beam 11. It shall however be noted that within the framework of the invention the workpiece can be held stationary in relation to the supporting arrangements and instead the laser machining apparatus can be moved in the direction of the arrow a in relation to the workpiece 1. Furthermore, the laser machining apparatus 10 and/or the workpiece 1 can be movable forwards and backwards in a direction transversely to the direction of the arrow a and transversely to the workpiece 1 along the direction of the arrow b, see Fig. 2.

Furthermore, the plant comprises a device 20 for cooling the workpiece 1. The cooling device 20 comprises a source for supplying a cooling medium. In the embodiment shown the source comprises a container 21 for liquid carbon dioxide. The cooling device 20 also comprises a member for supplying a cooling medium, which in the embodiment shown comprises a conduit 22 arranged to transport liquid carbon dioxide from the container 21 to an application member 23 for application of carbon dioxide against the workpiece 1. The application member 23 is arranged to be positionable in the vicinity of or against the workpiece 1. Advantageously the application member 23 can thus be displaceable in a direction extending essentially perpendicularly relative the surface of the workpiece 1 and in the example shown thus essentially radially in relation to the circular holding ring. The application member 23 is in the embodiment shown essentially stationary in relation to the direction of the movement of the workpiece 1, that is the application member 23 and the laser machining apparatus 10 are fixed in relation to the moveable workpiece 1 during the machining proper. Of course it is also possible to let the application member 23 be moved together with the laser machining apparatus 10 if the workpiece 1 is stationary instead.

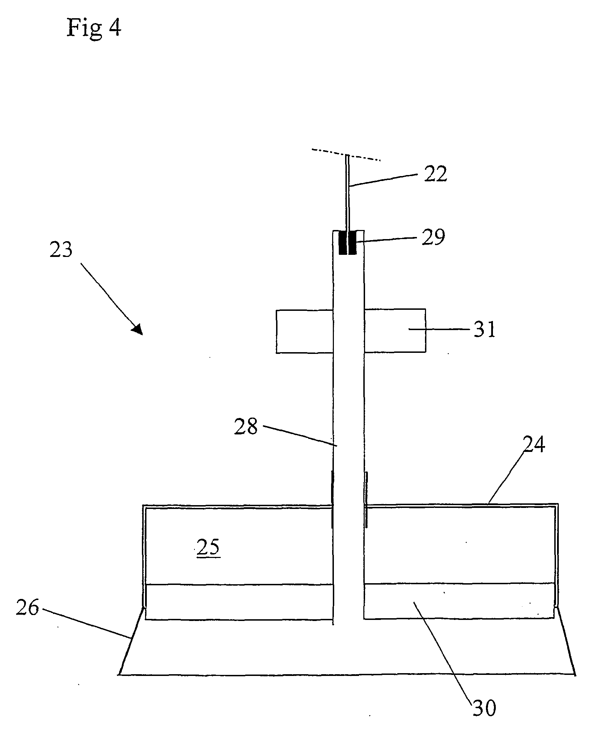

The application member 23 comprises a box-like element 24 which has an opening arranged to be turned towards the workpiece 1 and enclosing a space 25, see Fig. 3 and 4. When the box-like element 24 of the application member 23 is positioned against the workpiece 1 the space 25 will thus be essentially closed. Advantageously the application member 23 comprises a sealing member 26 arranged to sealingly bear against the workpiece 1 when the application member 23 is in an active position of use against the workpiece 1. The sealing member 26 extends around the opening of the boxlike element 24. It is not necessary for the sealing member 26 to extend around the whole opening but it is advantageous if it at least extends along that side of the boxlike element 24 which is facing the laser beam 11. The sealing member 26 can comprise a strip of an elastic material, for example plastics, natural or synthetic rubber.

Moreover, the application member 23 comprises at least one tube 28 and in the example shown three tubes 28, see Fig. 3. Each such tube 28 has a first end which opens in the space 25 and a second end which is connected to the conduit 22. The application member 23 also comprises a nozzle 29 arranged to allow passage of the cooling medium supplied to the space 25. In the embodiment shown such a nozzle 29 is arranged at the second end of each of the pipes 28. Each such nozzle 29 comprises a throttling. In the shown embodiment carbon dioxide will thus be led from the container 21 through the conduit 22 and the nozzle 29, after which the carbon dioxide is expanded in the tube 28 which forms an expansion chamber. Because of this expansion the liquid carbon dioxide will turn into a solid state and thus be supplied to the space 25 in a solid state as carbon dioxide snow.

Carbon dioxide can thus be supplied in such a way that the closed space 25 is essentially filled with carbon dioxide snow. Thus solid carbon dioxide will bear against the workpiece 1 and cool the same. Only with the arrangement shown in Fig. 1 the carbon dioxide will be forced against the workpiece thanks to gravity. Carbon dioxide snow that is heated and transforms into a gaseous state will rise in the space 25, thus a slight surpressure can be formed in an upper gas volume in the space 25. This gas volume will press the solid carbon dioxide against the workpiece 1. The heat transfer between the carbon dioxide and the workpiece 1 can also be increased in other ways, for example through intermittent feeding of the carbon dioxide to the closed space 25. In such a way a stirring will take place in the solid carbon dioxide in the space 25 leading to a better cooling efficiency. In Fig. 4 another embodiment of the invention is shown according to which a piston member 30 has been arranged in the space 25. The piston member 30 is displaceable upwards and downwards in the direction of the arrow c essentially and perpendicularly to the surface of the workpiece 1 and thus the carbon dioxide snow underneath the piston member 30 can be forced against the workpiece 1. In the embodiment shown the piston member 30 is fixedly mounted on the tube 28 which is displaceable in the direction of the arrow c with the help of a schematically indicated driving member 31. The first end of the tube 28 opens in the space 25 is thus arranged underneath the piston member 30.

As is apparent from Fig. 1 the application member 23 is arranged to apply the cooling medium against a part of the workpiece 1 at the same time as the laser beam 11 hits another part of the workpiece 1. The workpiece 1 in the embodiment shown moves in the direction of the arrow a and the workpiece 1 will therefore be cooled to a lower temperature than its original temperature before the laser beam 11 hits the workpiece 1. In such a way the part of the workpiece 1 machined by the laser beam 11 will have a reduced temperature and thus it will be possible to limit the maximum temperature reached during the machining.

The cooling device 20 further comprises a control valve 32 arranged on the conduit 22. With the control valve 32 the supply of liquid carbon dioxide can be controlled. The control valve 32 is also connected to the control unit 8. The control unit 8 can thus control the feeding of the workpiece 1, the laser beam 11 and the supply of cooling medium in such a way that these three functions are adapted to each other. For example the workpiece 1 can be fed intermittently, wherein the liquid carbon dioxide is supplied to the space 25 during a time period when the workpiece 1 is essentially not moving.

The container 21 can also be arranged to comprise other cooling mediums than liquid carbon dioxide, for example liquid nitrogen. In this case liquid nitrogen will be supplied to the space 25 through the nozzle 29. In this case the expansion chamber formed by the tubes 28 can be omitted. The supplying member, that is the conduit 22 and the application member 23 can, furthermore, comprise a heat insulation (not shown) preventing the cooling medium from being heated too much during the transport from the container 21 to the inner space 25. Such a heat insulation is particularly essential if nitrogen is used as a cooling medium.

The invention is not limited to the embodiments shown but can be varied and modified within the scope of the following claims. For example the tubes 28 can also be omitted when carbon dioxide is used as cooling medium, wherein one or several nozzles 29 can be arranged in the space 25 forming an expansion chamber. Carbon dioxide snow can also be produced at a distance from the application member 23 and supplied to the space 25 in a solid state through a conduit.

## Claims

1. A device for cooling a workpiece (1) in connection with machining of the workpiece (1) with a laser beam (11), the device comprising a source (21) for providing a cooling medium, a member (22) for supplying the cooling medium and an application member (23) arranged to be positionable in the vicinity of or against the workpiece (1), the supplying member (22) being arranged to supply the cooling medium to the application member (23), wherein the application member (23) is arranged to form an essentially closed space (25) together with the workpiece (1) for receiving the cooling medium, wherein
the space (25) is arranged to allow application of the cooling medium against the workpiece (1),
the application member (23) is arranged to apply the cooling medium against a part of the workpiece (1) at the same time as the laser beam (11) hits another part of the workpiece (1),
the application member (23) comprises a box-like element (24) with an opening arranged to be turned towards the workpiece (1), and
the application member (23) is arranged to be positioned in such a way that the cooling medium cools at least one part of the workpiece (1) before the laser beam hits that part of the workpiece (1).

2. A device according to claim 1, **characterised in that** the application member (23) comprises a sealing member (26) arranged to bear sealingly against the workpiece (1) and extend around at least a part of the opening.

3. A device according to claim 2, **characterised in that** the sealing member (26) comprises a strip of an elastic material.

4. A device according to any of the previous claims, **characterised in that** the cooling medium comprises carbon dioxide.

5. A device according to claim 4, **characterised in that** the application member (23) is arranged to supply carbon dioxide in such a way that it exists in an essentially solid state in the space (25).

6. A device according to any of the previous claims, **characterised in that** the cooling medium comprises nitrogen.

7. A device according to any of the previous claims, **characterised in that** the application member (23) comprises at least one nozzle (29) arranged to allow passage of the cooling medium supplied to the space (25).

8. A device according to claim 5 and 7, **characterised in that** the application member (23) comprises at least one tube (28) having a first end which opens in the space (25) and a second end at which the nozzle (29) is arranged for passage of liquid carbon dioxide, the tube (28) forming an expansion chamber for the carbon dioxide supplied through the nozzle (29).

9. A device according to any of the previous claims, **characterised in that** the application member (23) is arranged to allow the cooling medium in the space (25) to be forced against the workpiece (1).

10. A device according to any of the previous claims, **characterised in that** the device comprises means (30, 32, 8) arranged to increase the transfer of heat between the cooling medium and the workpiece (1).

11. A device according to claim 9 and 10, **characterised in that** said means comprises a piston member (30) arranged in the space (25) and arranged to force the cooling medium against the workpiece (1).

12. A device according to any of the claims 10 and 11 **characterised in that** said means (32, 8) are arranged to provide a movement in the cooling medium in the space (25).

13. A plant for machining a workpiece (1) comprising a laser apparatus (10) arranged to direct a laser beam (11) towards the workpiece (1) and a device (20) according to any one of the preceding claims.

14. A plant according to claim 13, **characterised in that** the plant comprises a feeding member (5, 6) arranged to provide a relative movement between the laser beam (11) and the workpiece, wherein the application member (23) is arranged to be positioned in such a way that the cooling medium cools at least a part of the workpiece (1) before the laser beam (11) hits that part of the workpiece (1).

15. A method for cooling a workpiece (1) in connection with machining the workpiece with a laser beam (11), comprising the steps of:
providing a cooling medium,
positioning of an application member (23) in the vicinity of or against the workpiece (1), the application member being arranged to form an essentially closed space (25) together with the workpiece (1),
supplying the cooling medium to the space (25),
cooling the workpiece (1) through application of the cooling medium in the space (25) against the workpiece,
displacing of the workpiece (1) or the laser beam (11) in order to achieve a relative movement of the workpiece in relation to the laser beam in a direction, wherein the cooling of the workpiece (1) comprises application of the cooling medium against at least a part of the workpiece (1) before the laser beam hits that part of the workpiece (1).

16. A method according to claim 15, wherein the cooling medium comprises carbon dioxide.

17. A method according to claim 16, wherein the carbon dioxide is supplied in such a way that it exists in an essentially solid state in the space.

18. A method according to any of the claims 15 to 17, wherein the cooling medium comprises nitrogen.

19. A method according to any of the claims 15 to 18, wherein the cooling medium is supplied to the space (25) through at least one nozzle (29).

20. A method according to claim 19, wherein the cooling medium is allowed to expand downstream of the nozzle (29).

21. A method according to any of the claims 15 to 20, wherein the cooling medium in the space (25) is forced against the workpiece (1).

## Patentansprüche

1. Vorrichtung zum Kühlen eines Werkstücks (1) in Verbindung mit der maschinellen Bearbeitung des Werkstücks (1) mit einem Laserstrahl (11), wobei die Vorrichtung eine Quelle (21) zur Bereitstellung eines Kühlmediums, ein Glied (22) zur Zuführung des Kühlmediums und ein Beaufschlagungsglied (23), das dazu angeordnet ist, in der Nähe des Werkstücks (1) oder an dem Werkstück (1) positioniert zu werden, umfasst, wobei das Zuführungsglied (22) dazu angeordnet ist, das Kühlmedium dem Beaufschlagungsglied (23) zuzuführen, wobei das Beaufschlagungsglied (23) dazu angeordnet ist, zusammen mit dem Werkstück (1) einen im Wesentlichen geschlossenen Raum (25) zur Aufnahme des Kühlmediums zu bilden, wobei
der Raum (25) dazu angeordnet ist, das Beaufschlagen des Werkstücks (1) mit dem Kühlmedium zu gestatten,
das Beaufschlagungsglied (23) dazu angeordnet ist, einen Teil des Werkstücks (1) zur gleichen Zeit mit dem Kühlmedium zu beaufschlagen, wie der Laserstrahl (11) auf einen anderen Teil des Werkstücks (1) trifft,
das Beaufschlagungsglied (23) ein kastenförmiges Element (24) mit einer Öffnung umfasst, die dazu angeordnet ist, zu dem Werkstück (1) gedreht zu werden, und
das Beaufschlagungsglied (23) dazu angeordnet ist, so positioniert zu werden, dass das Kühlmedium mindestens einen Teil des Werkstücks (1) kühlt, bevor der Laserstrahl auf jenen Teil des Werkstücks (1) auftrifft.

2. Vorrichtung nach Anspruch 1, **dadurch gekennzeichnet, dass** das Beaufschlagungsglied (23) ein Dichtungsglied (26) umfasst, das dazu angeordnet ist, abdichtend an dem Werkstück (1) anzuliegen und sich um mindestens einen Teil der Öffnung herum zu erstrecken.

3. Vorrichtung nach Anspruch 2, **dadurch gekennzeichnet, dass** das Dichtungsglied (26) einen Streifen aus einem elastischen Material umfasst.

4. Vorrichtung nach einem der vorhergehenden Ansprüche, **dadurch gekennzeichnet, dass** das Kühlmedium Kohlendioxid umfasst.

5. Vorrichtung nach Anspruch 4, **dadurch gekennzeichnet, dass** das Beaufschlagungsglied (23) dazu angeordnet ist, Kohlendioxid so zuzuführen, dass es in einem im Wesentlichen festen Zustand in dem Raum (25) vorliegt.

6. Vorrichtung nach einem der vorhergehenden Ansprüche, **dadurch gekennzeichnet, dass** das Kühlmedium Stickstoff umfasst.

7. Vorrichtung nach einem der vorhergehenden Ansprüche, **dadurch gekennzeichnet, dass** das Beaufschlagungsglied (23) mindestens eine Düse (29) umfasst, die ein Passieren des dem Raum (25) zugeführten Kühlmediums gestattet.

8. Vorrichtung nach Anspruch 5 und 7, **dadurch gekennzeichnet, dass** das Beaufschlagungsglied (23) mindestens ein Rohr (28) umfasst, das ein in dem Raum (25) mündendes erstes Ende und ein zweites Ende aufweist, an dem die Düse (29) zum Leiten von flüssigem Kohlendioxid angeordnet ist, wobei das Rohr (28) eine Expansionskammer für das durch die Düse (29) zugeführte Kohlendioxid bildet.

9. Vorrichtung nach einem der vorhergehenden Ansprüche, **dadurch gekennzeichnet, dass** das Beaufschlagungsglied (23) dazu angeordnet ist zu gestatten, dass das Kühlmedium in dem Raum (25) gegen das Werkstück (1) gedrückt wird.

10. Vorrichtung nach einem der vorhergehenden Ansprüche, **dadurch gekennzeichnet, dass** die Vorrichtung ein Mittel (30, 32, 8) umfasst, das dazu angeordnet ist, die Übertragung von Wärme zwischen dem Kühlmedium und dem Werkstück (1) zu verstärken.

11. Vorrichtung nach Anspruch 9 and 10, **dadurch gekennzeichnet, dass** das Mittel ein Kolbenglied (30) umfasst, das in dem Raum (25) dazu angeordnet ist, das Kühlmedium gegen das Werkstück (1) zu drücken.

12. Vorrichtung nach einem der Ansprüche 10 und 11, **dadurch gekennzeichnet, dass** die Mittel (32, 8) dazu angeordnet sind, eine Bewegung in dem Kühlmedium in dem Raum (25) zu gewährleisten.

13. Anlage zur maschinellen Bearbeitung eines Werkstücks (1), die eine Lasereinrichtung (10), die dazu angeordnet ist, einen Laserstrahl (11) zu dem Werkstück (1) zu leiten, und eine Vorrichtung (20) nach einem der vorhergehenden Ansprüche umfasst.

14. Anlage nach Anspruch 13, **dadurch gekennzeichnet, dass** die Anlage ein Speiseglied (5, 6) umfasst, das dazu angeordnet ist, eine Relativbewegung zwischen dem Laserstrahl (11) und dem Werkstück zu gewährleisten, wobei das Beaufschlagungsglied (23) dazu angeordnet ist, so positioniert zu werden, dass das Kühlmedium mindestens einen Teil des Werkstücks (1) kühlt, bevor der Laserstrahl (11) auf das Werkstück (1) auftrifft.

15. Verfahren zum Kühlen eines Werkstücks (1) in Verbindung mit der maschinellen Bearbeitung des Werkstücks mit einem Laserstrahl (11), mit den folgenden Schritten:
Bereitstellen eines Kühlmediums,
Positionieren eines Beaufschlagungsglieds (23) in der Nähe des Werkstücks (1) oder an dem Werkstück (1), wobei das Beaufschlagungsglied dazu angeordnet ist, zusammen mit dem Werkstück (1) einen im Wesentlichen geschlossenen Raum (25) zu bilden,
Zuführen eines Kühlmediums zu dem Raum (25),
Kühlen des Werkstücks (1) durch sein Beaufschlagen mit dem Kühlmedium in dem Raum (25),
Verschieben des Werkstücks (1) oder des Laserstrahls (11), um eine Relativbewegung des Werkstücks bezüglich des Laserstrahls in einer Richtung zu erreichen, wobei das Kühlen des Werkstücks (1) Beaufschlagen mindestens eines Teils des Werkstücks (1) mit dem Kühlmedium, bevor der Laserstrahl auf jenen Teil des Werkstücks (1) auftrifft, umfasst.

16. Verfahren nach Anspruch 15, wobei das Kühlmedium Kohlendioxid umfasst.

17. Verfahren nach Anspruch 16, wobei das Kohlendioxid so zugeführt wird, dass es in einem im Wesentlichen festen Zustand in dem Raum vorliegt.

18. Verfahren nach einem der Ansprüche 15 bis 17, wobei das Kühlmedium Stickstoff umfasst.

19. Verfahren nach einem der Ansprüche 15 bis 18, **dadurch gekennzeichnet, dass** das Kühlmedium dem Raum (25) durch mindestens eine Düse (29) zugeführt wird.

20. Verfahren nach Anspruch 19, wobei das Kühlmedium stromabwärts der Düse (29) expandieren kann.

21. Verfahren nach einem der Ansprüche 15 bis 20, wobei das Kühlmedium in dem Raum (25) gegen das Werkstück (1) gedrückt wird.

## Revendications

1. Dispositif de refroidissement d'une pièce (1) en connexion avec l'usinage de la pièce (1) avec un faisceau laser (11), le dispositif comprenant une source (21) pour fournir un agent de refroidissement, un élément (22) pour amener l'agent de refroidissement, et un élément d'application (23) agencé de manière à pouvoir être positionné dans le voisinage de la pièce (1) ou contre celle-ci, l'élément d'alimentation (22) étant agencé de manière à fournir l'agent de refroidissement à l'élément d'application (23), dans lequel l'élément d'application (23) est agencé de manière à former un espace essentiellement fermé (25) en collaboration avec la pièce (1) destiné à recevoir l'agent de refroidissement, dans lequel
l'espace (25) est agencé de manière à permettre l'application de l'agent de refroidissement contre la pièce (1);
l'élément d'application (23) est agencé de manière à appliquer l'agent de refroidissement contre une partie de la pièce (1) en même temps que le faisceau laser (11) frappe une autre partie de la pièce (1);
l'élément d'application (23) comprend un élément en forme de boîte (24) comportant une ouverture qui est agencée de manière à être tournée en direction de la pièce (1); et
l'élément d'application (23) est agencé de manière à être positionné de telle sorte que l'agent de refroidissement refroidisse au moins une partie de la pièce (1) avant que le faisceau laser frappe cette partie de la pièce (1).

2. Dispositif selon la revendication 1, **caractérisé en ce que** l'élément d'application (23) comprend un élément d'étanchéité (26) qui est agencé de manière à s'appuyer de façon étanche contre la pièce (1) et à s'étendre autour d'au moins une partie de l'ouverture.

3. Dispositif selon la revendication 2, **caractérisé en ce que** l'élément d'étanchéité (26) comprend une bande d'une matière élastique.

4. Dispositif selon l'une quelconque des revendications précédentes, **caractérisé en ce que** l'agent de refroidissement comprend du dioxyde de carbone.

5. Dispositif selon la revendication 4, **caractérisé en ce que** l'élément d'application (23) est agencé de manière à fournir du dioxyde de carbone de telle manière qu'il existe dans un état essentiellement solide dans l'espace (25).

6. Dispositif selon l'une quelconque des revendications précédentes, **caractérisé en ce que** l'agent de refroidissement comprend de l'azote.

7. Dispositif selon l'une quelconque des revendications précédentes, **caractérisé en ce que** l'élément d'application (23) comprend au moins une buse (29) qui est agencée de manière à permettre un passage de l'agent de refroidissement fourni vers l'espace (25).

8. Dispositif selon la revendication 5 et 7, **caractérisé en ce que** l'élément d'application (23) comprend au moins un tube (28) présentant une première extrémité qui s'ouvre dans l'espace (25), et une seconde extrémité à laquelle la buse (29) est agencée pour le passage de dioxyde de carbone liquide, le tube (28) formant une chambre d'expansion pour le dioxyde de carbone qui est fourni à travers la buse (29).

9. Dispositif selon l'une quelconque des revendications précédentes, **caractérisé en ce que** l'élément d'application (23) est agencé de manière à permettre à l'agent de refroidissement dans l'espace (25) d'être projeté contre la pièce (1).

10. Dispositif selon l'une quelconque des revendications précédentes, **caractérisé en ce que** le dispositif comprend des moyens (30, 32, 8) agencés de manière à augmenter le transfert de chaleur entre l'agent de refroidissement et la pièce (1).

11. Dispositif selon la revendication 9 et 10, **caractérisé en ce que** lesdits moyens comprennent un élément de piston (30) agencé dans l'espace (25) et agencé de manière à projeter l'agent de refroidissement contre la pièce (1).

12. Dispositif selon l'une quelconque des revendications 10 et 11, **caractérisé en ce que** lesdits moyens (32, 8) sont agencés de manière à créer un mouvement dans l'agent de refroidissement dans l'espace (25).

13. Installation pour usiner une pièce (1), comprenant un appareil à laser (10) agencé pour diriger un faisceau laser (11) en direction de la pièce (1), et un dispositif (20) selon l'une quelconque des revendications précédentes.

14. Procédé selon la revendication 13, **caractérisé en ce que** l'installation comprend une chambre d'alimentation (5, 6) agencée pour créer un mouvement relatif entre le faisceau laser (11) et la pièce, dans lequel l'élément d'application (23) est agencé de manière à être positionné de telle sorte que l'agent de refroidissement refroidisse au moins une partie de la pièce (1) avant que le faisceau laser (11) frappe cette partie de la pièce (1).

15. Procédé de refroidissement d'une pièce (1) en connexion avec l'usinage de la pièce avec un faisceau laser (11), comprenant les étapes suivantes:
fournir un agent de refroidissement;
positionner un élément d'application (23) dans le voisinage de la pièce (1) ou contre celle-ci, l'élément d'application étant agencé de manière à former un espace essentiellement fermé (25) en collaboration avec la pièce (1);
introduire l'agent de refroidissement dans l'espace (25);
refroidir la pièce (1) par l'intermédiaire de l'application de l'agent de refroidissement dans l'espace (25) contre la pièce;
déplacer la pièce (1) ou le faisceau laser (11) dans le but de créer un mouvement relatif de la pièce par rapport au faisceau laser dans une direction, dans lequel le refroidissement de la pièce (1) comprend l'application de l'agent de refroidissement contre au moins une partie de la pièce (1) avant que la faisceau laser frappe cette partie de la pièce (1).

16. Procédé selon la revendication 15, dans lequel l'agent de refroidissement comprend du dioxyde de carbone.

17. Procédé selon la revendication 16, dans lequel le dioxyde de carbone est fourni de telle sorte qu'il existe dans un état essentiellement solide dans l'espace.

18. Procédé selon l'une quelconque des revendications 15 à 17, dans lequel l'agent de refroidissement comprend de l'azote.

19. Procédé selon l'une quelconque des revendications 15 à 18, dans lequel l'agent de refroidissement est introduit dans l'espace (25) à travers au moins une buse (29).

20. Procédé selon la revendication 19, dans lequel l'agent de refroidissement peut se dilater en aval de la buse (29).

21. Procédé selon l'une quelconque des revendications 15 à 20, dans lequel l'agent de refroidissement dans l'espace (25) est projeté contre la pièce (1).
